(19) Europäisches Patentamt
European Patent Office
Office européen des brevets

(11) **EP 0 750 180 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.$^7$: **G01F 1/66**, G01N 29/02, G01P 5/00

(21) Anmeldenummer: **96106570.3**

(22) Anmeldetag: **25.04.1996**

(54) **Verfahren und Schaltungsanordnung zur Messung der Strömungsgeschwindigkeit mittels akustischer Laufdifferenzen**

Method and circuit arrangement for measuring fluid flow velocity by measuring acoustic transit time differences

Méthode et agencement de circuit pour mesurer la vitesse d'écoulement d'un fluide par mesure des différences de temps de propagation

(84) Benannte Vertragsstaaten:
**DE FR GB IT**

(30) Priorität: **22.06.1995 DE 19522697**

(43) Veröffentlichungstag der Anmeldung:
**27.12.1996 Patentblatt 1996/52**

(73) Patentinhaber: **SICK AG**
**79183 Waldkirch (DE)**

(72) Erfinder:
• **Herrmann, Volker, Dr.**
**01159 Dresden (DE)**
• **Koepernik, Horst**
**01309 Dresden (DE)**

(74) Vertreter: **Manitz, Finsterwald & Partner**
**Martin-Greif-Strasse 1**
**80336 München (DE)**

(56) Entgegenhaltungen:
**EP-A- 0 051 293          EP-A- 0 407 676**
**WO-A-93/00569          GB-A- 2 176 894**
**US-A- 4 603 589**

• **PATENT ABSTRACTS OF JAPAN vol. 007, no. 231 (P-229), 13.Oktober 1983 & JP-A-58 120119 (KANSAI DENRIYOKU KK;OTHERS: 01), 16.Juli 1983,**

**Beschreibung**

Die Erfindung betrifft ein Verfahren zur Festlegung des Zeitpunktes des Beginns eines sich aufgrund einer entsprechenden äußeren Anregung ausgelösten hochfrequenten Schwingungspaketes und eine Schaltungsanordnung hierfür nach den Oberbegriffen der Patentansprüche 1 bzw. 6.

Es ist bekannt, die Strömungsgeschwindigkeit von Gasen aus der Laufzeitdifferenz von in entgegengesetzten Richtungen in das Gas geschickten Ultraschallimpulsen zu ermitteln (siehe z.B. DE 43 22 849 C1), wobei zwischen der Laufrichtung der Ultraschallimpulse und der Strömungsrichtung des Gases ein deutlich von 90° verschiedener Winkel in der Größenordnung von z.B. 45° vorliegen soll. Es ist also eine sehr exakte Differenzlaufzeitbestimmung der Ultraschallimpulse erforderlich. So ergibt ein Meßfehler von nur 10µs bei einer Meßstrecke von 3 m mit einer 45°-Neigung zwischen Ultraschallimpuls-Laufrichtung und Gasströmungsrichtung sowie 200°C Gastemperatur bereits eine Abweichung von etwa 0,45 m/s bei der Geschwindigkeitsberechnung. Schmalbandige Ultraschallwandler, die wegen ihrer Robustheit und hohen Sendeleistung bevorzugt werden, erfordern Signallängen von mehreren Millisekunden, also etwa dem tausendfachen der gewünschten Zeitauflösung.

Bei der Laufzeitmessung entstehen zufällige Fehler durch Turbulenzen und Temperaturgradienten im Gas und dadurch erzeugte Amplituden-, Laufzeit- und Impulsformschwankungen der Meßsignale. Diese Fehler können durch Mittelwertbildung oder durch Korrelationsverfahren weitgehend vermindernd werden. Daneben treten aber auch systematische, durch bekannte Verfahren nicht ausgleichbare Fehler auf. Quellen systematischer Meßfehler können sowohl in der Meßstrecke als auch in den Wandlern liegen.

So können in dem Kanal, der die Meßstrecke enthält, Reflexionen auftreten, die zu einer Überlagerung des Ultraschallimpulses mit seinen reflektierten Anteilen führen. Je nach Phasenlage wird dadurch das Originalsignal verstärkt oder geschwächt und so die Form der Hüllkurve verändert. Da derartige Reflexionen von der Kanalgeometrie abhängig sind, können sie auf die beiden Schallrichtungen unterschiedlich einwirken und über systematische Formunterschiede Nullpunktfehler verursachen.

Die reflektierten und durch Interferenz die Impulsform beeinflussenden Signalanteile sind wegen ihrer längeren Laufstrecke gegenüber dem direkten Signal verzögert. Deshalb ist der Signalbeginn noch ungestört, und erst im weiteren Verlauf des Signals werden die Interferenzen wirksam. Erfindungsgemäß sollen daher nach Möglichkeit die am Anfang erscheinenden Signalanteile zur Gewinnung der Zeitinformation benutzt und damit der Einfluß von Interferenzstörungen weitgehend vermieden werden.

Die Ultraschallwandler haben infolge von Fertigungstoleranzen und Materialinhomogenitäten bereits im Neuzustand nicht genau gleiche Eigenschaften. Durch Temperatur-, Alterungs- und Korrosionseinflüsse sowie infolge Verschmutzung durch staubige Medien treten Veränderungen auf, die sich auf Güte und Resonanzfrequenz auswirken. Die Wandlergüte beeinflußt dabei die An- und Abschwingteilheit, während Differenzen zwischen Anregungs- und Resonanzfrequenz kompliziertere Formänderungen erzeugen. Wegen der von 90° abweichenden Neigung der Meßstrecke gegen die Strömungsrichtung ist der stromaufwärts liegende und deshalb vom Gas direkt angeströmte Wandler den oben genannten Einflüssen stärker ausgesetzt als der andere. Die unterschiedlichen Wandlereigenschaften bewirken entsprechend differierende Formen der Empfangssignale, was bei den meisten Zeitnahmeverfahren zu systematischen Meßfehlem führt.

Es ist eine Methode und eine Einrichtung zur Laufzeitmessung von Ultraschallsignalen bekannt geworden (GB-A-2 176 894), bei denen die digitalisierten Abtastwerte der Empfangssignale in zugeordneten Speicherzellen solange aufsummiert werden, bis einer der Speicherzellen ein vorgegebener Wert erreicht wird. Die Adresse dieser Zelle wird als Laufzeit gewertet. Hierbei verfälscht jede systematische Formänderung der Empfangssignale, bei der sich der zeitliche Abstand vom Beginn bis zum Maximum des Signals ändert, die gemessenen Zeiten.

Weiter ist es bekannt (EP 0 407 676 B1), nicht das Maximum des Signals als Zeitreferenz zu benutzen, sondern das Erreichen eines vom Maximalwert abgeleiteten Schwellenwertes. Damit verringert sich der Zeitabstand zwischen Signalbeginn und Zeitnahme sowie etwa proportional dazu der Einfluß schwankender Anstiegszeiten. Eine weitgehende Kompensation formbedingter Meßfehler ist so jedoch nicht erreichbar.

Aus der WO 93/00569 ist ein elektronisches Strömungsgeschwindigkeits-Meßgerät bekannt, bei welchem als Zeitreferenz ein bestimmter Schwellenwert der Hüllkurve der empfangenen Ultraschallimpulse verwendet wird, die durch Vergleich mit drei Referenzspannungspegeln erhalten wird. An die Amplitude der erhaltenen Hüllkurve wird die Bedingung gestellt, dass sie nicht zu niedrig und nicht zu hoch sein darf, um ausgewertet zu werden. Auch hier entspricht die Zeitreferenz dem Zeitpunkt des Anstiegs der Hüllkurve über einen vorbestimmten Schwellenwert.

Es ist das Ziel der vorliegenden Erfindung, eine optimale, von systematischen Fehlern weitgehend freie Zeitnahme auch dann zu gewährleisten, wenn sich die Reflexionsbedingungen im Meßkanal und die Eigenschaften der Ultraschallwandler ändern. Insbesondere sollen bei Strömungsgeschwindigkeitsmessungen nach dem akustischen Laufzeitdifferenzverfahren Genauigkeit und Störfestigkeit erhöht werden.

Erfindungsgemäß wird diese Aufgabe durch die Merkmale der kennzeichnenden Teile der Ansprüche 1 und 6 gelöst.

Erfindungsgemäß wird also aus der Hüllkurve eines hochfrequenten Empfangssignals, insbesondere Ultraschallempfangssignals, dessen zeitlicher Ursprung so bestimmt, daß Änderungen von Form und Anstiegzeit dieses Signals möglichst wenig Einfluß auf die Genauigkeit der ermittelten Laufzeitdifferenz haben.

Der wahre Zeitnullpunkt eines einzelnen Schwingungspaketes ist von untergeordneter Bedeutung. Wichtig dagegen ist die Reproduzierbarkeit bezüglich der Einzellaufzeiten, welche maßgebend für die hohe Genauigkeit der Differenzlaufzeitmessung ist. Hierdurch wird auch gleichzeitig die Störfestigkeit der Geschwindigkeitsmessung mittels akustischer Laufzeitdifferenzen erhöht.

Ein besonderes Merkmal des erfindungsgemäßen Verfahrens und der erfindungsgemäßen Schaltungsanordnung ist die hohe Fehlertoleranz gegenüber systematischen Veränderungen an den Wandlern. Damit sind gute Meßgenauigkeit, Reproduzierbarkeit und Zuverlässigkeit bei verringertem Aufwand möglich. So können beispielsweise die in der oben erwähnten DE 43 22 849 C1 beschriebenen kostenintensiven Zusatzeinrichtungen an den Wandlern und die Verwendung des rechneraufwendigen Kreuzkorrelationsverfahrens vermieden werden.

Der Erfindungsgedanke ist somit darin zu sehen, daß die Zeitnahme nicht nur an einem, sondern an zwei Schwellenwerten des Hüllkurvenanstiegs erfolgt (Zwei-Schwellen-Zeitnahme). Durch Wahl geeigneter Verhältnisse der Zeitnahmeschwellen bzw. Amplituden zum Impulsmaximum kann der Einfluß von Güteänderungen der Wandler auf die ermittelte Laufzeit nahezu zum Verschwinden gebracht werden.

Durch die Verhältnisse nach den Ansprüche 2 bzw. 7 wird eine besonders gute und auch bei stark schwankender Güte, z. B. infolge schwankender Temperaturen bzw. Verstimmung noch voll ausreichende Reproduzierbarkeit des zeitlichen Nullpunktes gewährleistet. Die Verwendung des Wendepunktes als charakteristischer Hüllkurvenpunkt hat weiter den Vorteil, daß die höhere und zeitlich spätere Schwelle noch sehr nahe am Signalanfang sich befindet, wo Interferenzen, die durch vagabundierende Streusignale hervorgerufen werden, noch nicht oder nur im geringen Maße vorhanden sind.

Die Ansprüche 3 bzw. 8 geben besonders bevorzugte Ausführungsbeispiele für die Bestimmung des Zeitpunktes des Beginns jedes Schwingungspaketes an.

Besonders vorteilhaften Ultraschallanwendungen des erfindungsgemäßen Verfahrens sind in den Ansprüchen 4 bzw. 9 definiert.

Erfindungsgemäß wird also der Einfluß frequenzbedingter Impulsformänderungen auf die Zwei-Schwellen-Zeitnahme dadurch verringert, daß als Bezugswert für die Berechnung der Schwellenhöhe bevorzugt nicht das Amplitudenmaximum, sondern das zeitlich frühere und damit weniger gestörte Steilheitsmaximum der Hüllkurve benutzt wird. Dieser Bezugswert läßt sich auch zur Minimierung des Güteeinflusses bei gleichem Schwellenverhältnis verwenden. Gleichzeitig vermindert die Wahl dieses Bezugswertes den oben erwähnten Einfluß reflexionsbedingter Formänderungen.

Das Höhenverhältnis bzw. Amplitudenverhältnis der Zeitnahmeschwellen hat großen Einfluß darauf, wie gut sich bei dem Verfahren Impulsformänderungen kompensieren lassen. Erfindungsgemäß wird das Höhenverhältnis so gewählt, daß zwischen Zeitnullpunkt, erstem und zweiten Zeitnahmepunkt jeweils im wesentlichen gleiche Zeitabstände bestehen, um eine optimale Kompensationswirkung zu erzielen.

Als Kompensationsverfahren hat die erfindungsgemäße Zwei-Schwellen-Zeitnahme jedoch keinen unbegrenzten Anwendungsbereich. Sie bezieht sich auf die im Normalbetrieb auftretenden Änderungen der Wandlereigenschaften und nicht auf gravierende Störfälle. Wenn diese nicht den Totalausfall eines oder beider Wandler verursachen, so könnten dadurch bedingte Meßfehler längere Zeit unentdeckt bleiben.

Aus diesem Grunde wird das vorstehend beschriebene Zeitnahmeverfahren erfindungsgemäß durch ein Testverfahren ergänzt, welches starke Abweichungen der Wandlereigenschaften vom Normalverhalten erkennt und in geeigneter Weise signalisiert. Zudem kann mit Hilfe dieses Testverfahrens, da es nur den Wandler betrifft, bestimmt werden, ob die Fehlerursachen im Wandler oder in der Übertragungsstrecke zu suchen sind, wenn kein ausreichender Schalldruck für eine Messung vorhanden sein sollte. Das Verfahren beruht auf der Abhängigkeit des beim Senden gemessenen Stromverlaufs vom Zustand des betreffenden Wandlers. Dabei wirken sich Änderungen der Resonanzfrequenz und anderer, weiterer Eigenschaften besonders stark auf die Kurvenform des Anregungsstromes aus.

Ein bevorzugtes Testverfahren ist durch Anspruch 5 und eine bevorzugte Schaltungsanordnung zu dessen Ausführung durch Anspruch 10 gekennzeichnet.

Nach dem erfindungsgemäßen Testverfahren werden die Abtastwerte der Anregungsströme bei intakten und in Resonanz befindlichen Wandlern gespeichert. In Testroutinen, die in gewissen Zeitabständen in den normalen Meßbetrieb eingeschoben werden, erfolgt ein Vergleich des aktuellen Anregungsstromverlaufs mit dem abgespeicherten. Überschreiten die dabei ermittelten Differenzen ein vorgegebenes Maß, so wird dies von der Meßeinrichtung erkannt. Die Reaktion des Gerätes kann getrennt nach dem detektierten Fehlermechanismus erfolgen. Überschreiten lediglich die Zeitdifferenzen die vorgegebenen Toleranzen, so wird ein Warnsignal abgegeben; die Messung kann jedoch fortgesetzt werden. Das Warnsignal zeigt an, daß die Genauigkeit eingeschränkt ist und eine Reparatur erfolgen sollte. Überschreiten auch Amplituden- und Phasenkriterien das vorgegebene Toleranzmaß, so wird eine Fehlermeldung ausgegeben und die Messung abgebrochen.

Ein wesentlicher Grundgedanke der vorliegenden Erfindung besteht also darin, daß die Störsicherheit eines Meßgerätes/Meßverfahrens erhöht wird. Die Zwei-Schwellen-Methoden arbeiten zuverlässig nur innerhalb des definierten Arbeitsbereiches der Ultraschallwandler. Diese Wandler können auch andere Fehler als diese Änderungen haben, die nicht zum Totalausfall führen.

Die Erfindung wird im folgenden beispielsweise anhand der Zeichnung beschrieben; in dieser zeigt

Figur 1 eine blockschaltbildartige Darstellung einer erfindungsgemäßen Schaltungsanordnung mit zwei in einem strömenden Medium angeordneten Ultraschallwandlern,

Figur 2 drei bei sehr unterschiedlichen Güten auftretende Hüllkurven eines vom jeweiligen Empfangs- Ultraschallwandler empfangenen Impulspaketsignals,

Figur 3 eine ähnliche Hüllkurvendarstellung wie Figur 1, jedoch bei drei unterschiedlichen Abstimmungen des Empfangswandlers,

Figur 4 die Zeitabhängigkeit des demodulierten Stromes im Sendewandler bei zwei unterschiedlicher Wandlergüten und die Fehlerdifferenz in Abhängigkeit von der Zeit bei Resonanz und konstanter Anregung, und

Figur 5 ein ähnliches Diagramm wie Figur 4, wobei die Zeitabhängigkeit des demodulierten Stromes im Sendewandler bei Resonanz und einer 10%-Verstimmung und der durch die Verstimmung hervorgerufene Fehler bei konstanter Güte und Anregung in Abhängigkeit von der Zeit dargestellt sind.

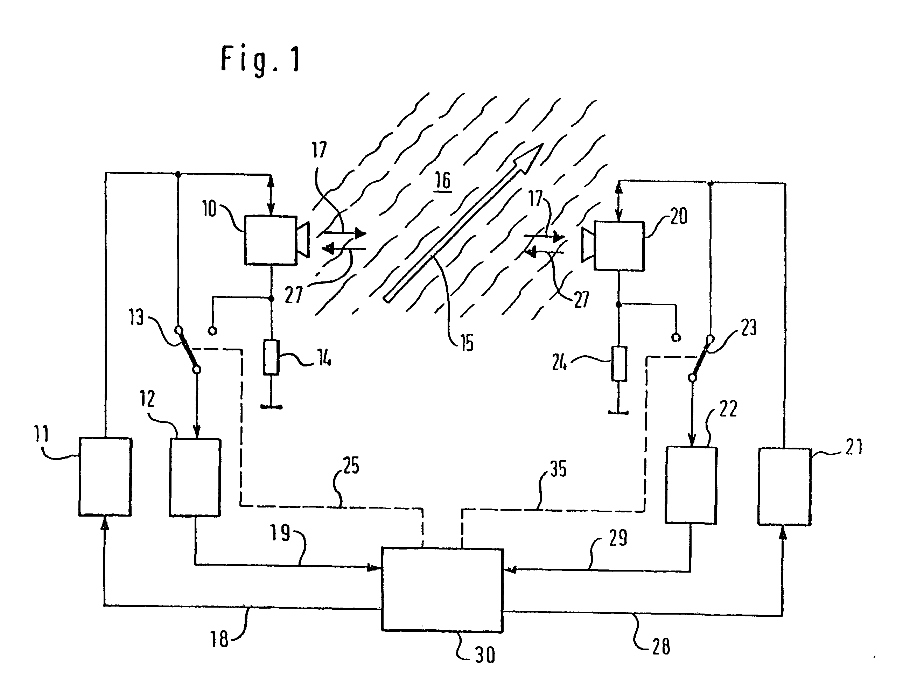

Nach Figur 1 sind zwei auf gegenüberliegenden Seiten eines in Richtung des Pfeiles 15 strömenden vorzugsweise gasförmigen Mediums 16 angeordnete, über sehr kleine Widerstände 14 bzw. 24 an Masse gelegte Ultraschallwandler 10, 20 vorgesehen, welche zur Schwingungsanregung mit Sendestufen 11 bzw. 21 in Verbindung stehen. Auf diese Weise können die Wandler 10, 20 in Richtung der Pfeile 17, 27 unter einem Winkel von etwa 45° zur Strömungsrichtung 15 des Mediums 16 abwechselnd Ultraschallimpulspakete in das Medium 16 schicken.

Empfangsstufen 12 bzw. 22 können über Umschalter 13 bzw. 23 entweder an den auch mit der Sendestufe 11 bzw. 21 verbunden Pol der Ultraschallwandler 10, 20 oder an dem Verbindungspunkt zwischen den Wandlern 10, 20 und den Widerständen 14 bzw. 24 angelegt werden.

Die Sendestufen 11, 21 und die Empfangsstufen 12, 22 sind jeweils mit einer Steuer-Auswerteeinheit 30 verbunden, welche die Sendestufen 11, 21 über Leitungen 18, 28 steuert und gegebenenfalls auch speist und die über die Leitungen 19, 29 von den Empfangsstufen 12, 22 empfangenen Empfangssignale verarbeitet. Die Steuer-Auswerteeinheit 30 ist weiter über Steuerleitungen 25, 35 an den Umschalter 13 bzw. 23 angeschlossen, um diese in die eine oder andere Schaltstellung bringen zu können. Die in Figur 1 gezeigte Stellung der Umschalter 13 bzw. 23 entspricht dem normalen Meßbetrieb, währenddessen in einem von der Steuer-Auswerteeinheit 30 veranlaßten ersten Zyklus der vom Sender 11 angerege Ultraschallwandler einmal oder mehrmals hintereinander Ultraschall in Form eines hochfrequenten Impulspaketes in Richtung der Pfeile 17 aussendet. Die Ultraschallimpulse werden auch nach Durchlaufen der Meßstrecke im Medium 16 vom durch die Steuer-Auswerteeinheit 30 auf Empfang geschalteten Ultraschallwandler 20 aufgenommen und in elektrische Signale umgeformt, die über den Schalter 23 und den Empfänger 22 der Steuer-Auswerteeinheit 30 zugeführt werden, in welcher die für diese Richtung von den Ultraschallimpulsen benötigte Laufzeit als Zeitdifferenz zwischen Senden und Empfang eines bzw. jedes Impulspaketes ermittelt wird.

In einem zweiten Zyklus schaltet die Steuer-Auswerteeinheit 30 den Ultraschallwandler 10 auf Empfang und den Ultraschallwandler 20 auf Sendung, worauf der Ultraschallwandler 20 in Richtung der Pfeile 27 Impulse durch das Medium 16 zum nunmehr als Empfänger wirkenden Ultraschallwandler 10 sendet, der die empfangenen Signale in elektrische Signale umwandelt und über den Empfänger 12 an die Steuer-Auswerteeinheit 30 weiterleitet. Aus der Differenz der hierbei und zuvor in Gegenrichtung ermittelten Laufzeiten der Impulspakete berechnet die Steuer-Auswerteeinheit 30 in bekannter Weise die Strömungsgeschwindigkeit des Mediums 16 in Strömungsrichtung 15. Hierbei wird insbesondere der deutlich von 90° abweichende Winkel zwischen den Richtungen 17, 27 der Ultraschallimpulspakete und der Strömungsrichtung 15 des Mediums 16 berücksichtigt.

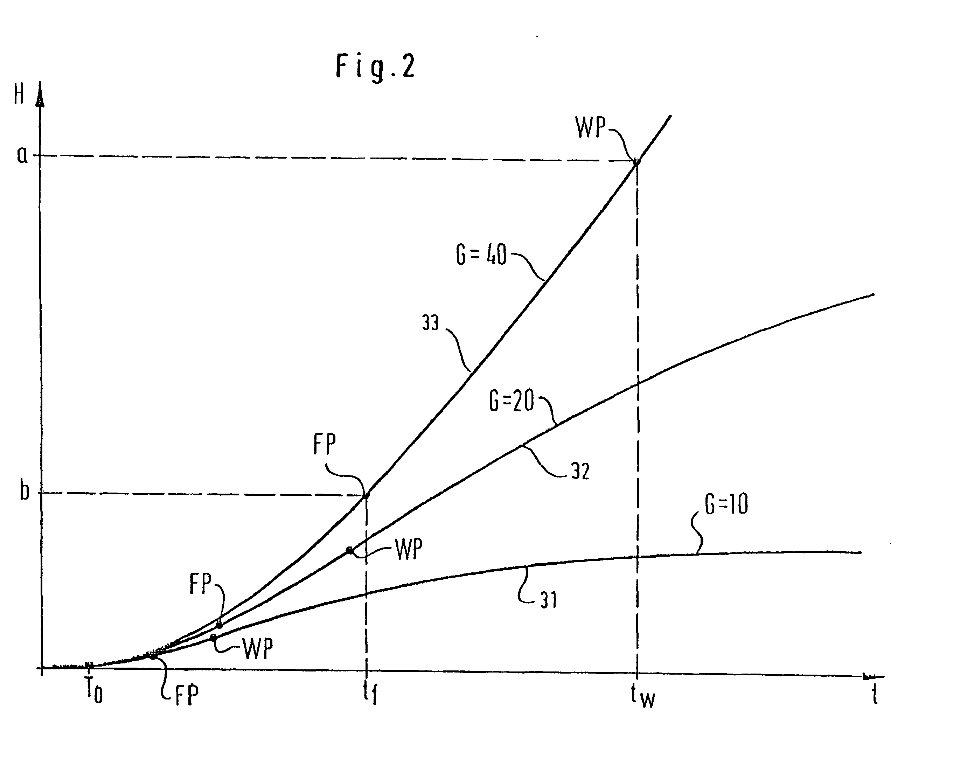

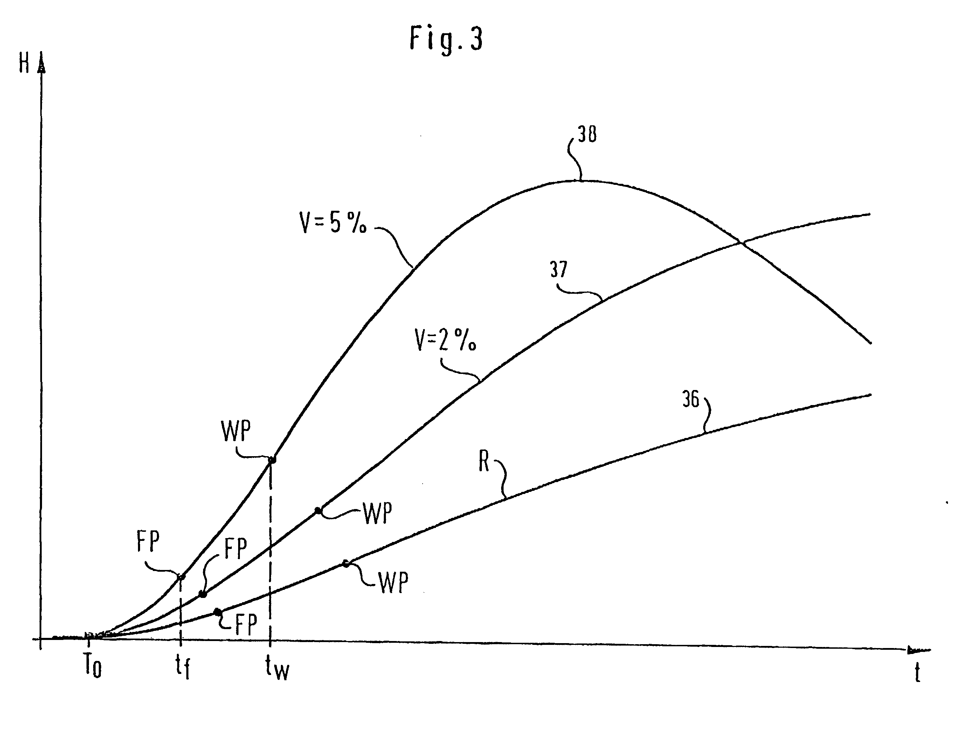

Die Diagramme der Figuren 2 und 3 demonstrieren die Wirkung der erfindungsgemäßen Zwei-Schwellen-Zeitnahme. Um eine Periode verzögert gegen den linken Rand der beiden Figuren beginnt die konstante, sinusförmige Anregung des Ultraschallwandlers 10 bzw. 20. Dargestellt ist in den Figuren 2 und 3 jeweils die mit dem Quadraturverfahren bestimmte Hüllkurve der am jeweils gegenüberliegenden Wandler 20 bzw. 10 erscheinenden, ansteigenden Wechselspannung. Auf der Ordinate ist die Amplitude A der Wechselspannung, auf der Abszisse die Zeit t aufgetragen.

Das Quadraturverfahren ist eine in der Nachrichtentechnik bekannte Demodulationsmethode für sinusförmige Signale. Die Hüllkurvenpunkte ergeben sich dabei als quadratische Mittelwerte der im Abstand einer Viertelperiode gewonnenen Abtastwerte A des Ursprungssignals. Eine besonders gute Annäherung an die ideale Hüllkurve liefert die symmetrische Form der Methode mit drei Abtastwerten A entsprechend der folgenden Formel:

$$H(t) = A(t)^2 + A(t-T/4)^2 + A(t)^2 + A(t+T/4)^2 \qquad (1)$$

mit

$H(t)$ = Hüllkurvenwert zur Zeit t

$A(t)$ = Abtastwert zur Zeit t

$T = 1/f$ = Periodendauer

$f$ = Signalfrequenz des hochfrequenten Impulspakete

Die obere Zeitnahmeschwelle geht nun erfindungsgemäß durch den Wendepunkt WP (Punkt größter Steilheit) der Hüllkurve. Der Zeitnullpunkt $t_0$ errechnet sich erfindungsgemäß nach der folgenden Formel:

$$t_0 = (k \ast t_f - t_w)/(k-1) \qquad (2),$$

wobei bedeutet:

$t_w$ die von einem willkürlich gewählten Zeitnullpunkt gemessene Zeit bei Erreichen des Wendepunkts WP,

$t_f$ die von dem gleichen willkürlich gewählten Zeitpunkt gemessene Zeit, bei welcher der ein vorbestimmter Bruchteil des Hüllkurvenwertes am Wendepunkt WP gemessen wird, und

$k$ das Reziproke des vorbestimmten Bruchteils des Hüllkurvenwertes am Wendepunkt WP, also das reziproke Verhältnis des Hüllkurvenwertes a am Wendepunkt WP zum Hüllkurvenwert b, der dem vorbestimmten Bruchteil b des Hüllkurvenwertes am Wendepunkt WP entspricht.

Wird k=2 gewählt, so vereinfacht sich diese Formel wie folgt:

$$t_0 = 2 \ast t_f - t_w \qquad (3)$$

Als optimal hat sich eine Konstante k=2,94 erwiesen.

In Figur 2 sind drei Hüllkurven 31, 32, 33 für verschiedene Güten G 10, 20 bzw. 40 des empfangenden Ultraschallwandlers eingezeichnet. Auf jeder Hüllkurve sind der Wendepunkt WP und der sogenannte Fraktionspunkt FP wiedergegeben, bei welchem der Hüllkurvenwert b einen vorbestimmten Bruchteil, z.B. 0,34, des Hüllkurvenwertes a am Orte des Wendepunkts WP beträgt. Das Reziproke dieses Wertes, d.h. der Quotient b/a ist gleich der Konstanten K.

In Figur 2 ist der tatsächliche Nullpunkt des hochfrequenten Schwingungspaketes mit $T_0$ bezeichnet. Der erfindungsgemäß berechnete Zeitnullpunkt $t_0$ stimmt mit diesem tatsächlichen Zeitnullpunkt $T_0$ zwar nicht exakt überein, doch sind die Abweichungen von diesem in der Praxis vernachlässigbar, obwohl eine Güteänderung von 1:4 angenommen wurde, die praktisch kaum vorkommen wird. Grund für die Vernachlässigbarkeit ist, daß die Reproduzierbarkeit für Einzelmessungen entscheidend ist, um eine hohe Genauigkeit bei der Differenzlaufzeitmessung zu erreichen.

Figur 3 zeigt die Hüllkurven der von einem der Ultraschallwandler 10 bzw. 20 empfangenen hochfrequenten Schwingungspakete bei Resonanz R, einer Verstimmung V von 2% bzw. einer Verstimmung V von 5%. Man erkennt, daß auch bei diesen extremen Unterschieden der Hüllkurven die berechneten Nullpunkte $t_0$ der verschiedenen Hüllkurven 36, 37, 38 nahe beieinander und auch nahe dem tatsächlichen Zeitnullpunkt $T_0$ liegen.

Verstimmungen der Schwingkreise, die in der Praxis einer temperatur- und alterungsabhängigen Wandlerresonanz entsprechen, erzeugen eine komplizierte, durch Schwebungen zwischen Anregungs- und Eigenfrequenz gekennzeichnete Form der Hüllkurve. Diese Formänderungen bleiben jedoch bis zum Wendepunkt der Hüllkurve relativ gering, so daß die Auswahl dieses Punktes als charakteristischer Hüllkurvenpunkt besonders vorteilhaft ist. Beim Ausführungsbeispiel nach Figur 3 ist außer der Verstimmung auch die Anregung variiert worden, um die Kurven besser unterscheiden zu können, was wegen der reinen Maßstabsfunktion der letzteren keinen Einfluß auf den berechneten Nullpunkt hat. Trotz einer bei 5% Verstimmung schon sehr starken Formänderung der Hüllkurve ergeben die berechneten Nullpunkte noch recht geringe Abweichungen untereinander und von dem wahren Zeitnullpunkt bei gleicher Größe des vorbestimmten Bruchteils, der wie in Figur 2 mit dem optimalen Wert von 0,34 angenommen ist.

Von Zeit zu Zeit erfolgt eine Testung der Wandler, um substantielle Änderungen von deren Eigenschaften so rechtzeitig festzustellen, daß dadurch keine Meßungenauigkeiten hervorgerufen werden können.

Zum Zwecke der Testung sind nach Figur 1 die Widerstände 14 bzw. 24 vorgesehen. Während der Testung werden die Schalter 13 bzw. 23 so umgeschaltet, daß der Verbindungspunkt zwischen den Ultraschallwandlern 10, 20 mit dem Widerstand 14 bzw. 24 an den zugeordneten Empfänger 12 bzw. 22 angelegt wird.

In einem ersten Testzyklus legt die Sendestufe 11 ein definiertes Impulssignal an den Wandler 10. Der Wandlerstrom erzeugt dabei am Widerstand 14 einen Spannungsabfall, der über den Schalter 13 an den Empfänger 12 und entsprechend verstärkt an die Steuer-Auswerteeinheit 30 abgegeben wird. Hier wird das Stromsignal des Ultraschallwandlers 10 mit einem bei Inbetriebnahme des Gerätes abgespeicherten Sollsignal verglichen. Überschreitet die dabei ermittelte Differenz eine vorgegebene Schwelle, so wird dieser Zustand in der oben beschriebenen Weise signalisiert wird. Auf jeden Fall verhindert die Steuer-Auswerteeinheit 30, daß das Gerät im Falle einer derartigen Abweichung weiter ohne entsprechende Warnungs- oder Fehlermeldung arbeitet.

In einem zweiten Testzyklus werden die analogen Prozeduren an dem Ultraschallwandler 20 unter Beteiligung der Sendestufe 21, des Empfängers 22 sowie des Widerstandes 24 vorgenommen. Auch hier erfolgt eine Abschaltung durch die Steuer-Auswerteeinheit 30, sofern das beim Wirksamwerden des Widerstandes 24 erzeugte Stromsignal des Ultraschallwandlers 22 mit einem bei Inbetriebnahme des Gerätes in der Steuer-Auswerteeinheit 30 gespeicherten Sollsignal verglichen und dabei eine Differenz festgestellt wird, die eine vorgegebene Schwelle überschreitet.

Wird während der beiden Testzyklen durch die Steuer-Auswerteeinheit 30 ermittelt, daß die Differenzen zwischen den beiden aktuellen Test-Wandlerströmen und den in der Steuer-Auswerteeinheit 30 abgespeicherten Sollsignalen innerhalb der vorgegebenen Fehlergrenzen bleiben, so werden die Schalter 13, 23 wieder in die aus Figur 1 ersichtliche Position umgeschaltet, und der normale Meßbetrieb wird fortgesetzt.

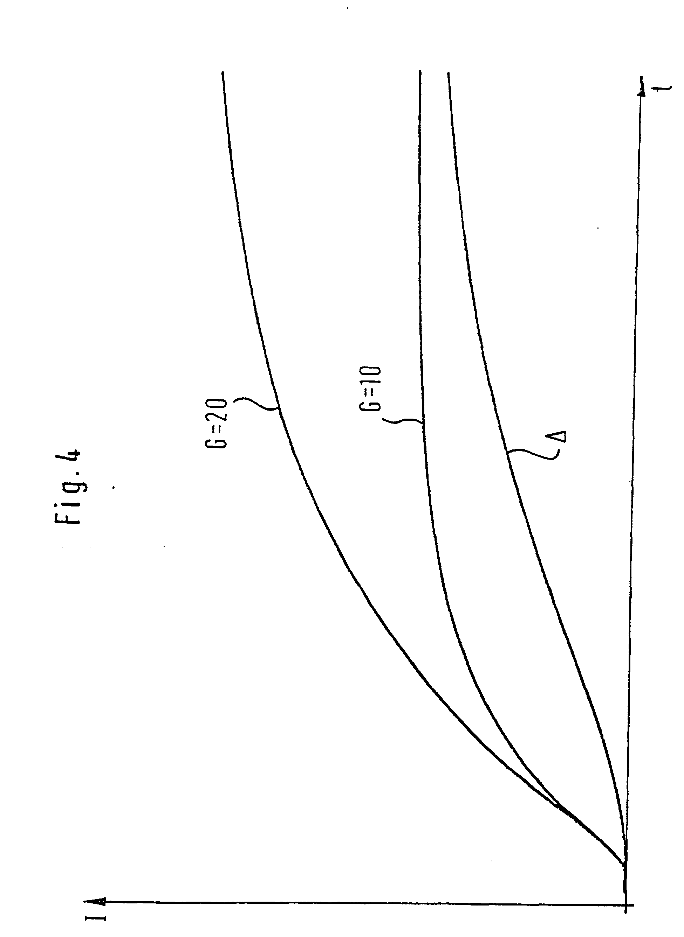

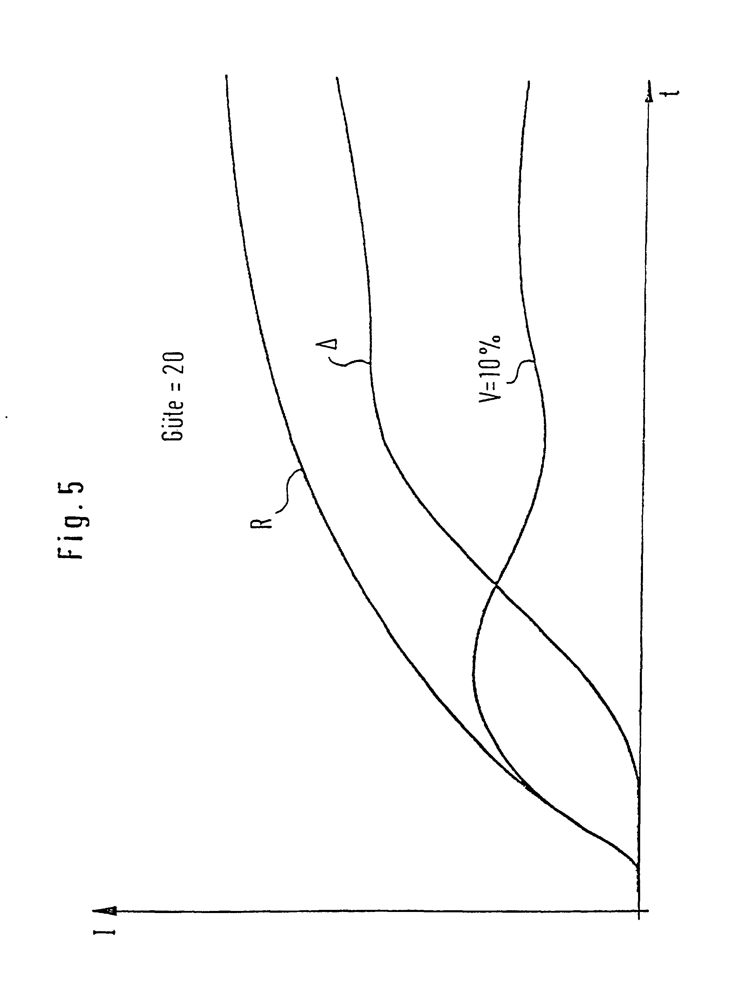

Zur Verdeutlichung der erfindungsgemäßen Testverfahren wird auf die Figuren 4 und 5 Bezug genommen.

In Figur 4 sind die Zeitabhängigkeiten der demodulierten Wandlerströme I bei einer ursprünglichen Güte von 20 und außerdem bei einer Verringerung der Güte auf den halben Wert von 10 sowie der daraus resultierende Fehler Δ dargestellt.

Figur 5 zeigt in analoger Weise die Zeitabhängigkeiten der demodulierten Wandlerströme I bei Resonanz R einerseits und einer Verstimmung V von 10% andererseits sowie der sich daraus ergebenden Fehlerkurve Δ.

Aus den Figuren 4 und 5 wird deutlich, daß sowohl bei einer Güteänderung der Ultraschallwandler 10, 20 als auch bei einer Verstimmung von 10% gegenüber der Resonanz der Fehler mit dem Abstand vom zeitlichen Impulsbeginn zunimmt. Durch entsprechend lange Anregung der Wandler und Nutzung der Stromdifferenz am Ende der Anregung kann somit das Testverfahren sehr empfindlich gemacht werden.

Zweckmäßigerweise werden die Testzyklen in bestimmten Zeitabständen automatisch durchgeführt, wozu die Umschalter 13, 23 durch die Steuer-Auswerteeinheit 30 zu den entsprechenden Zeitpunkten automatisch in die Teststellung umgeschaltet werden. Hierzu ist die Auswerteeinheit über Steuerleitungen 25, 35 mit den Schaltern 13, 23 verbunden.

Die Funktion des beschriebenen Verfahrens und der beschriebenen Schaltungsanordnung sind wie folgt:

In der Steuer-Auswerteeinheit 30 werden die aus den Empfangssignalen der Ultraschallwandler 10 bzw. 20 gewonnenen aktuellen Hüllkurven gespeichert, und es wird dann der Wendepunkt WP der Hüllkurve vor Erreichen des Maximums gesucht und der zeitliche Abstand dieses Wendepunktes WP von einem willkürlich gewählten zeitlichen Nullpunkt festgestellt. Anschließend ermittelt die Steuer-Auswerteeinheit 30 denjenigen Punkt FP auf der Hüllkurve, wo die Amplitude einen vorbestimmten Bruchteil der Amplitude am Wendepunkt WP besitzt, z.B. auf 34%. Auch der zeitliche Abstand dieses sogenannten Fraktionspunktes FP von dem willkürlich gewählten Zeitnullpunkt wird bestimmt.

Ist die Amplitude der Hüllkurve am Wendepunkt WP mit a und die Amplitude am Fraktionspunkt FP mit b bezeichnet, so läßt sich ein dem wahren Nullpunkt der Hüllkurve sehr nahe kommender Bezugszeitpunkt $t_0$ über die bei a und b ermittelten Zeiten $t_w$ bzw. $t_f$ nach der obigen Formel (2) ermitteln, wobei k das Reziproke des vorzubestimmenden Bruchteils der Amplitude a am Wendepunkt WP ist. Es gilt somit a/b=k. Der Kenntnis der absoluten Werte von a und b bedarf es nicht, weil es erfindungsgemäß nur auf das Verhältnis dieser Amplituden ankommt, welches vorgegeben werden muß.

Mit dem so ermittelten Zeitpunkt $t_0$ kann jetzt nach dem bekannten Verfahren eine definierte Laufzeitmessung und damit die Strömungsgeschwindigkeitsmessung vorgenommen werden.

Das erfindungsgemäße Verfahren zur exakten und zuverlässigen Laufzeitbestimmung von Ultraschallsignalen, deren Form sich infolge schwankender Güte oder Resonanzfrequenz der Wandler verändert, besteht also darin, daß die Zeitnahme an zwei Punkten der Hüllkurve erfolgt, von denen einer vorzugsweise der Wendepunkt und der andere ein Punkt ist, dessen Amplitude um einen vorbestimmten Faktor, beispielsweise 0,34 geringer als die Amplitude am Wendepunkt ist. Weiter wird zur Erkennung von unzulässigen Veränderungen an den Wandlern der Verlauf des am Ende der Anregungsperiode fließenden Wandlerstromes mit dem im Sollzustand gemessenen und gespeicherten verglichen und ausgewertet.

Bezugszeichenliste

| 10 | Ultraschallwandler |
| 11 | Sendestufe |
| 12 | Empfangsstufe |
| 13 | Umschalter |
| 14 | Widerstand |
| 15 | Strömungsrichtung |
| 16 | Medium |
| 17 | Laufrichtung |
| 18 | Leitung |

| | |
|---|---|
| 19 | Leitung |
| 20 | Ultraschallwandler |
| 21 | Sendestufe |
| 22 | Empfangsstufe |
| 23 | Umschalter |
| 24 | Widerstand |
| 25 | Steuerleitung |
| 26 | |
| 27 | Laufrichtung |
| 28 | Leitung |
| 29 | Leitung |
| 30 | Steuer-Auswerteeinheit |
| 31 | Hüllkurve |
| 32 | Hüllkurve |
| 33 | Hüllkurve |
| 34 | |
| 35 | Steuerleitung |
| 36 | Hüllkurve |
| 36 | Hüllkurve |
| 37 | Hüllkurve |
| 38 | Hüllkurve |
| WP | Wendepunkt |
| FP | Fraktionspunkt |
| G | Güte |
| V | Verstimmung |
| R | Resonanz |
| D | Fehlerdifferenz |
| H | Hüllkurvenwert |
| I | demodulierter Wandlerstrom |
| a | Amplitude am Wendepunkt WP |
| b | Amplitude am Fraktionspunkt FP |
| $t_w$ | Zeit am Wendepunkt WP |
| $t_f$ | Zeit am Fraktionspunkt FP |

## Patentansprüche

1. Verfahren zur Festlegung des Zeitpunktes ($t_0$) des Beginns eines sich aufgrund einer entsprechenden äußeren Anregung ausgelösten hochfrequenten Schwingungspaketes,
**dadurch gekennzeichnet,**
**daß** bezogen auf einen zu bestimmenden zeitlichen Nullpunkt die Zeiten ($t_f$, $t_w$) an wenigstens zwei Punkten der Hüllkurve (31, 32, 33; 36, 37, 38) des Schwingungspaketes bestimmt werden, von denen einer ein charakteristischer Hüllkurvenpunkt ist und der andere eine Amplitude (b) gleich einem vorbestimmten Bruchteil der Amplitude (a) des charakteristischen Hüllkurvenpunktes aufweist, und daß daraus der Zeitpunkt ($t_0$) des Beginns des Schwingungspaketes bestimmt wird.

2. Verfahren nach Anspruch 1,
**dadurch gekennzeichnet,**
**daß** der charakteristische Hüllkurvenpunkt der erste Wendepunkt (WP) der Hüllkurve (31, 32, 33; 36, 37, 38) ist, und/oder daß der Bruchteil der Amplitude des charakteristischen Hüllkurvenpunktes, an welchem eine der Zeiten ($t_f$) bestimmt wird, 0,2 bis 0,8, vorzugsweise 0,3 bis 0,6 und insbesondere 0,3 bis 0,5, beträgt, sowie besonders vorteilhaft bei 0,34 liegt.

3. Verfahren nach einem der vorhergehenden Ansprüche,
**dadurch gekennzeichnet,**
**daß** der Zeitpunkt ($t_0$) des Beginns des hochfrequenten Schwingungspaketes nach der folgenden Formel festgelegt wird:

$$t_0 = (k*t_f - t_w)/(k-1),$$

wobei bedeutet:

$t_w$ die von einem willkürlich gewählten Zeitnullpunkt gemessene Zeit bei Erreichen des Wendepunkts WP,
$t_f$ die von dem gleichen willkürlich gewählten Zeitpunkt gemessene Zeit, bei welcher der ein vorbestimmter Bruchteil des Hüllkurvenwertes am Wendepunkt WP gemessen wird, und
k das Reziproke des vorbestimmten Bruchteils des Hüllkurvenwertes am Wendepunkt WP, also das reziproke Verhältnis des Hüllkurvenwertes a am Wendepunkt WP zum Hüllkurvenwert b, der dem vorbestimmten Bruchteil b des Hüllkurvenwertes am Wendepunkt WP entspricht.

4. Verfahren nach einem der vorhergehenden Ansprüche,
**dadurch gekennzeichnet,**
**daß** es beim Empfang von Impulspaketen bei Ultraschallwandlern angewandt wird, um den zeitlichen Nullpunkt ($t_0$) der am Empfangswandler (10, 20) ankommenden Schwingungspakete festzulegen, wobei es insbesondere beim abwechselnden Senden und Empfangen von Impulspaketen durch zwei an einem strömenden Medium (16) angeordnete Ultraschallwandler (10, 20), die die Impulspakete unter einem von 90° deutlich verschiedenen Winkel zur Strömungsrichtung (15) abwechselnd von entgegengesetzten Seiten in das Medium (16) senden bzw. aus ihm empfangen, angewendet wird, wobei aus den Laufzeitdifferenzen der Impulspakete in den beiden Richtungen die Strömungsgeschwindigkeit des Mediums (16) bestimmt wird.

5. Verfahren nach einem der vorhergehenden Ansprüche, das auch zur Erkennung von Änderungen der Schwingungseigenschaften von Hochfrequenz-Schwingungsgebern bzw. -empfängern, insbesondere von Ultraschallwandlern, dient, deren Güte und/oder Resonanzfrequenz sich im Laufe der Zeit ändern kann,

**dadurch gekennzeichnet,**

**daß** die digitalisierten Abtastwerte des bei einer definierten Anregung fließenden Wandlerstromes (I) mit den in einem Speicher einer Steuer-Auswerteeinheit (30) abgelegten digitalisierten Abtastwerten des Anregungsstromes eines in einem Vergleichszustand befindlichen Wandlers und die sich dabei ergebende Differenzwerte zur Fehlererkennung ausgewertet werden, wobei insbesondere die Auswertung der zur Fehlererkennung benutzten Differenzwerte des Wandlerstromes gegen Ende der Anregungsperiode erfolgt.

6. Schaltungsanordnung zur Festlegung des Zeitpunktes des Beginns eines sich aufgrund einer entsprechenden äußeren Anregung ausgelösten hochfrequenten Schwingungspaketes, insbesondere zur Ausführung des Verfahrens nach einem der vorangehenden Ansprüche,

 **dadurch gekennzeichnet,**

**daß** in einer Steuer-Auswerteeinheit (30) bezogen auf einen zu bestimmenden zeitlichen Nullpunkt die Zeiten ($t_f$, $t_w$) an wenigstens zwei Punkten der Hüllkurve (31, 32, 33; 33, 34, 35) Schwingungspaketes bestimmt werden, von denen einer ein charakteristischer Hüllkurvenpunkt ist und der andere eine Amplitude (b) gleich einem vorbestimmten Bruchteil der Amplitude (a) am charakteristischen Hüllkurvenpunkt aufweist, und daß daraus der Zeitpunkt ($t_0$) des Beginns des Schwingungspaketes bestimmt wird.

7. Schaltungsanordnung nach Anspruch 6,
**dadurch gekennzeichnet,**
**daß** die Steuer-Auswerteeinheit (30) als charakteristischen Hüllkurvenpunkt den ersten Wendepunkt (WP) der Hüllkurve (31, 32, 33; 33, 34, 35) feststellt, und/oder daß die Auswerteeinheit (30) den vorbestimmten Bruchteil der Amplitude des charakteristischen Hüllkurvenpunktes auf 0,2 bis 0,8, vorzugsweise 0,3 bis 0,6 und insbesondere 0,3 bis 0,5, und besonders vorteilhaft auf etwa 0,34, festlegt.

8. Schaltungsanordnung nach einem der Ansprüche 6 oder 7,
**dadurch gekennzeichnet,**
**daß** die Auswerteeinheit (30) den Zeitpunkt ($t_0$) des Beginns des hochfrequenten Schwingungspaketes nach der folgenden Formel festlegt:

$$t_0 = (k \cdot t_f - t_w)/(k-1),$$

wobei bedeutet:

$t_w$   die von einem willkürlich gewählten Zeitnullpunkt gemessene Zeit bei Erreichen des Wendepunkts WP,

$t_f$   die von dem gleichen willkürlich gewählten Zeitpunkt gemessene Zeit, bei welcher der ein vorbestimmter Bruchteil des Hüllkurvenwertes am Wendepunkt WP gemessen wird, und

k   das Reziproke des vorbestimmten Bruchteils des Hüllkurvenwertes am Wendepunkt WP, also das reziproke Verhältnis des Hüllkurvenwertes a am Wendepunkt WP zum Hüllkurvenwert b, der dem vorbestimmten Bruchteil b des Hüllkurvenwertes am Wendepunkt WP entspricht.

9. Schaltungsanordnung nach einem der Ansprüche 6 bis 8,
**dadurch gekennzeichnet,**
**daß** sie bei der Messung der Strömungsgeschwindigkeiten von Gasen mittels des Laufzeit-Differenzverfahrens verwendet wird.

10. Schaltungsanordnung nach einem der Ansprüche 6 bis 9, welches zur Ausführung des Verfahrens nach Anspruch 5 dient, mit wenigstens einem Ultraschallwandler (10, 20), der mit einem Sender (11, 21) über einen Umschalter (13, 23) mit einem Empfänger (12, 22) verbunden ist, und einer Steuer-Auswerteeinheit (30), an welche sowohl der Sender (11, 21) als auch der Empfänger (12, 22) angeschlossen ist,
 **dadurch gekennzeichnet,**
**daß** ein zwischen dem Wandler (10, 20) und Masse angeordneter Widerstand (14, 24) wahlweise über den Umschalter (13, 23) mit dem Empfänger (12, 22) verbunden werden kann, um im Speicher der Auswerteeinheit (30) die digitalisierten Abtastwerte des Ausgangsstroms des im Vergleichszustand befindlichen Wandlers (10, 20) abzuspeichern und mit dort angelegten Sollwerten zu vergleichen.

**Claims**

1. Method of determining the time point (to) of the start of a high frequency oscillation packet, triggered as a result of corresponding external excitation,
**characterised in that** - relative to a zero point in time which is to be deter-mined - the times ($t_f$, $t_w$) are determined at at least two points of the envelope curve (31, 32, 33; 36, 37, 38) of the oscillation packet, of which one is a characteristic envelope curve point and the other has an amplitude (b) equal to a predetermined fraction of the amplitude (a) of the characteristic envelope curve point; and **in that** the time point ($t_0$) of the start of the oscillation packet is determined from this.

2. Method in accordance with claim 1, **characterised in that** the characteristic envelope curve point is the first point of inflection (WP) of the envelope curve (31, 32, 33; 36, 37, 38); and/or **in that** the fraction of the amplitude of the characteristic envelope curve point, at which one of the times ($t_f$) is determined, amounts to 0.2 to 0.8, preferably to 0.3 to 0.6 and in particular to 0.3 to 0.5, and particularly advantageously amounts to 0.34.

3. Method in accordance with any one of the preceding claims, **characterised in that** the time point ($t_o$) of the start of the high frequency oscillation packet is determined in accordance with the following formula:

$$t_0 = (k*t_f-t_w) / (k-1),$$

where:

$t_w$ signifies the time measured from an arbitrarily selected zero time point until the point of inflection WP is reached,

$t_f$ signifies the time measured from the same arbitrarily selected time point at which the predetermined fraction of the envelope curve value at the point of inflection WP is measured, and

$k$ signifies the reciprocal of the predetermined fraction of the envelope curve value at the point of inflection WP, i.e. the reciprocal ratio of the envelope curve value a at the point of inflection WP relative to the envelope curve value b which corresponds to the predetermined fraction b of the envelope curve value at the point of inflection WP.

4. Method in accordance with any one of the preceding claims, **characterised in that** it is used during the reception of pulse packets at ultrasonic converters in order to determine the zero time point (to) of the oscillation packets arriving at the receiving converter (10, 20), with it in particular being used during the alternating transmission and reception of pulse packets by two ultrasonic converters (10, 20) arranged at a flowing medium (16) which alternately transmit the pulse packets from opposite sides into the medium (16) and receive the pulse packets from opposite sides of the medium (16) at an angle to the flow direction (15) which differs significantly from 90°, with the flow speed of the medium (16) being determined from the transit time differences of the pulse packets in the two directions.

5. Method in accordance with any one of the preceding claims, which also serves for the recognition of changes of the oscillation characteristics of high frequency oscillation transmitters and/or receivers, in particular of ultrasonic transducers, the quality and/or resonant frequency of which can change in the course of time, **characterised in that** the digitised sampling values of the transducer current (I) flowing with a defined excitation are evaluated with the digitised sampling values of the excitation current of a converter in a comparison state which are stored in a memory of a control/evaluation unit (30) and the resulting difference values are evaluated for fault recognition, with in particular the evaluation of the difference values of the transducer current used for fault recognition taking place towards the end of the excitation period.

6. Circuit arrangement for specifying the time point of the start of a high frequency oscillation packet, triggered as a result of a corresponding external excitation, in particular for carrying out the method of one of the preceding claims, **characterised in that** the times ($t_f$, $t_w$) at at least two points of the envelope curve (31, 32, 33; 33, 34, 35) of the oscillation packet are determined in a control/evaluation unit (30) in relation to a zero time point to be determined, one of the points being a characteristic envelope curve point and the other having an amplitude (b) equal to a predetermined fraction of the amplitude (a) at the characteristic envelope curve point; and **in that** the time point ($t_o$) of the start of the oscillation packet is determined from this.

7. Circuit arrangement in accordance with claim 6, **characterised in that** the control/evaluation unit (30) determines the first point of inflection (WP) of the envelope curve (31, 32, 33; 33, 34, 35) as the characteristic envelope curve point; and/or **in that** the evaluation unit (30) specifies the predetermined fraction of the amplitude of the characteristic envelope curve point to be 0.2 to 0.8, preferably 0.3 to 0.6, and in particular 0.3 to 0.5, and especially advantageously to be about 0.34.

8. Circuit arrangement in accordance with any one of claims 6 or 7, **characterised in that** the evaluation unit (30) determines the time point ($t_o$) of the start of the high frequency oscillation packet in accordance with the following formula:

$$to = (k*t_f-t_w) / (k-1),$$

where:

$t_w$ signifies the time measured from an arbitrarily selected zero time point until the point of inflection WP is reached,

$t_f$ signifies the time measured from the same arbitrarily selected time point at which the predetermined fraction of the envelope curve value at the point of inflection WP is measured, and

k          signifies the reciprocal of the predetermined fraction of the envelope curve value at the point of inflection WP, i.e. the reciprocal ratio of the envelope curve value a at the point of inflection WP relative to the envelope curve value b which corresponds to the predetermined fraction b of the envelope curve value at the point of inflection WP.

9. Circuit arrangement in accordance with any one of claims 6 to 8, **characterised in that** it is used for the measurement of the flow speeds of gases by means of the transit time difference method.

10. Circuit arrangement in accordance with any one of claims 6 to 9, which serves for the execution of the method of claim 5, comprising at least one ultrasonic converter (10, 20), which is connected to a transmitter (11, 21) via a change-over switch (13, 23) with a receiver (11, 22) and a control/evaluation unit (30) to which both the transmitter (11, 21) and also the receiver (11, 22) are connected, **characterised in that** a resistor (14, 24) arranged between the converter (10, 20) and earth can be selectively connected via the change-over switch (13, 23) to the receiver (12, 22) in order to store the digitised sampling values of the output current of the converter (10, 20) which is in the comparison state in the memory of the evaluation unit (30) and to compare them with desired values stored there.

**Revendications**

1. Procédé de détermination de l'instant ($t_0$) du début d'un paquet d'oscillations hautes fréquences déclenché en raison d'une excitation externe appropriée, **caractérisée en ce que**, par rapport à un point zéro à déterminer temporellement sont déterminés les temps ($t_f$, $t_w$) en au moins deux points de la courbe enveloppe (31, 32, 33 ; 36, 37, 38) du paquet d'oscillations parmi lesquels l'un est un point caractéristique de la courbe enveloppe et l'autre présente une amplitude (b) égale à une fraction prédéterminée de l'amplitude (a) du point caractéristique de la courbe enveloppe, et que l'instant ($t_0$) du début du paquet d'oscillations est déterminé à partir de ces points.

2. Procédé selon la revendication 1, **caractérisé en ce que** le point caractéristique de la courbe enveloppe est le premier point d'inflexion (WP) de la courbe enveloppe (31, 32, 33 ; 36, 37, 38), et/ou que la fraction de l'amplitude du point caractéristique de la courbe enveloppe, auquel un des temps ($t_f$) est déterminé, a une valeur comprise entre 0,2 et 0,8, de préférence entre 0,3 et 0,6 et plus particulièrement entre 0,3 et 0,5, et de manière particulièrement avantageuse égale à 0,34.

3. Procédé selon l'une des revendications précédentes, **caractérisé en ce que** l'instant ($t_0$) du début du paquet d'oscillations hautes fréquences est déterminé d'après la formule suivante :

$$t_0 = (k*t_f - t_w) / (k-1),$$

dans laquelle :

$t_w$ est le temps mesuré entre un instant zéro choisi arbitrairement et l'instant lorsque la courbe a atteint le point d'inflexion WP,

$t_f$ est le temps mesuré entre le même instant choisi arbitrairement et l'instant auquel une fraction prédéterminée de la valeur de la courbe enveloppe est mesurée au point d'inflexion WP, et

k est l'inverse de la fraction prédéterminée de la valeur de la courbe enveloppe au point d'inflexion WP, c'est-à-dire le rapport inverse de la valeur de la courbe enveloppe a au point d'inflexion WP par rapport à la valeur de la courbe enveloppe b qui correspond à la fraction prédéterminée b de la valeur de la courbe enveloppe au point d'inflexion WP.

4. Procédé selon l'une des revendications précédentes, **caractérisé en ce qu'**elle est employée lors de la réception de paquets d'impulsions dans des convertisseurs d'ultrasons afin de déterminer le point zéro temporel ($t_0$) des paquets d'oscillations arrivant au convertisseur récepteur (10, 20), cette méthode étant employée en particulier lors de la réception et l'émission alternées de paquets d'impulsions par deux convertisseurs d'ultrasons (10, 20) affectés à un milieu en mouvement (16), lesquels convertisseurs émettent dans le milieu (16) ou reçoivent de lui en alternance et de côtés opposés les paquets d'impulsions sous un angle distinctement différent de 90° par rapport à la direction du flux (15), la vitesse du flux du milieu (16) étant déterminée à partir de la différence de temps de propagation des paquets d'impulsions dans les deux sens.

5. Procédé selon l'une des revendications précédentes, qui sert également à détecter des changements dans les propriétés d'oscillations d'émetteurs ou de récepteurs d'oscillations hautes fréquences, en particulier de convertisseurs d'ultrasons, dont le facteur de qualité et/ou la fréquence de résonance peu(ven)t se modifier au cours du temps, **caractérisée en ce que** les valeurs échantillonnées numérisées du courant du convertisseur (I) s'écoulant lors d'une excitation définie sont analysées avec les valeurs échantillonnées numérisées du courant d'excitation d'un convertisseur se trouvant dans un état de comparaison, lesquelles valeurs étant stockées dans une mémoire d'une unité d'analyse et de commande (30), et **en ce que** les valeurs de différence en résultant sont analysées à des fins de détection d'erreur, l'analyse des valeurs de différence du courant des convertisseurs employées pour la détection d'erreur ayant lieu en particulier à la fin de la période d'excitation.

6. Agencement de circuit destiné à déterminer l'instant de début d'un paquet d'oscillations hautes fréquences déclenché en raison d'une excitation extérieure appropriée, en particulier pour exécuter le procédé selon l'une des précédentes revendications, **caractérisé en ce que** dans une unité d'analyse et de commande (30) sont déterminés par rapport à un instant zéro temporel à déterminer les temps ($t_f$, $t_w$) en au moins deux points de la courbe enveloppe (31, 32, 33 ; 33, 34, 35) du paquet d'oscillations, parmi lesquels l'un est un point caractéristique de la courbe enveloppe et l'autre présente une amplitude (b) égale à une fraction prédéterminée de l'amplitude (a) au point caractéristique de la courbe enveloppe et que l'instant ($t_0$) du début du paquet d'oscillations en est déterminé.

7. Agencement de circuit selon la revendication 6, **caractérisé en ce que** l'unité d'analyse et de commande (30) détermine comme point caractéristique de la courbe enveloppe le premier point d'inflexion (WP) de la courbe enveloppe (31, 32, 33 ; 33, 34, 35), et/ou que l'unité d'analyse (30) détermine pour la fraction prédéfinie de l'amplitude du point caractéristique de la courbe enveloppe une valeur de 0,2 à 0,8, de préférence de 0,3 à 0,6 et en particulier de 0,3 à 0,5, et de manière particulièrement avantageuse autour de 0,34.

8. Circuit électronique selon l'une des revendications 6 ou 7, **caractérisé en ce que** l'unité d'analyse (30) détermine l'instant ($t_0$) du début du paquet d'oscillations hautes fréquences selon la formule suivante :

$$t_0 = (k * t_f - t_w) / (k-1),$$

dans laquelle :

$t_w$ est le temps mesuré entre un instant zéro choisi arbitrairement et l'instant lorsque la courbe a atteint le point d'inflexion WP,

$t_f$ est le temps mesuré entre le même instant choisi arbitrairement et l'instant auquel une fraction prédéterminée de la valeur de la courbe enveloppe est mesurée au point d'inflexion WP, et

k est l'inverse de la fraction prédéterminée de la valeur de la courbe enveloppe au point d'inflexion WP, c'est-à-dire le rapport inverse de la valeur de la courbe enveloppe a au point d'inflexion WP par rapport à la valeur de la courbe enveloppe b qui correspond à la fraction prédéterminée b de la valeur de la courbe enveloppe au point d'inflexion WP.

9. Agencement de circuit selon l'une des revendications 6 à 8, **caractérisé en ce qu'**il est employé lors de la mesure de vitesses de flux de gaz réalisée à l'aide de la méthode de mesure des différences de temps de propagation.

10. Agencement de circuit selon l'une des revendications 6 à 9, lequel sert à exécuter la méthode selon la revendication 5, avec au moins un convertisseur d'ultrasons (10, 20) qui est relié à un émetteur (11, 21) et à un récepteur (12, 22) par le biais d'un commutateur (13, 23), et avec une unité d'analyse et de commande (30) à laquelle l'émetteur (11, 21) et également le récepteur (12, 22) sont reliés, **caractérisé en ce qu'**une résistance (14, 24) placée entre le convertisseur (10, 20) et la masse peut être reliée au choix par le biais du commutateur (13, 23) au récepteur (12, 22) afin d'enregistrer dans la mémoire de l'unité d'analyse (30) les valeurs échantillonnées numérisées du courant de sortie du convertisseur (10, 20) se trouvant en état de comparaison et de les comparer avec les valeurs théoriques qui sont stockées dans la mémoire.

Fig.1

EP 0 750 180 B1

Fig.2

Fig.3

EP 0 750 180 B1

Fig. 4

Fig. 5

Güte = 20

R

Δ

V=10%

I

t

EP 0 750 180 B1